# EUROPEAN PATENT SPECIFICATION

(11) **EP 4 282 706 B1**
(45) Date of publication and mention of the grant of the patent: **27.11.2024**
(21) Application number: 22215293.6
(22) Date of filing: 21.12.2022
(51) Int. Cl.: B60P 1/48, B60P 1/64

(54) **WORKING EQUIPMENT WITH A LIFT FRAME ASSEMBLY**
ARBEITSAUSRÜSTUNG MIT EINER HUBRAHMENANORDNUNG
ÉQUIPEMENT DE TRAVAIL AVEC UN ENSEMBLE CADRE DE LEVAGE

(43) Date of publication of application: 29.11.2023
(73) Proprietor: Hiab AB, 215 32 Malmö (SE)
(72) Inventor: Vähä-Piikkiö, Ville, Rusko (FI); Nyström, Mikko, Rusko (FI); Mattila, Tommi, Paimio (FI); Sirén, Pasi, Kirjala (FI)
(74) Representative: Bjerkén Hynell KB

(56) References cited:
- EP-B1- 3 838 666
- CN-U- 202 264 684
- FR-A1- 2 750 088
- JP-A- 2020 104 768

## Description

### Technical field

The present disclosure relates to a working equipment comprising a movable arm for loading and unloading a load carrying object, such as a container, to/from the vehicle. The movable arm has a first end connected to the vehicle and a second end arranged to connect the movable arm to the load carrying object during the loading or unloading by using a lift frame assembly to be releasably attached to the movable arm. The frame may also be firmly attached to the movable arm.

### Background

The present disclosure relates to the field of lift frames for load carrying objects, such as containers, in particular lift frames adapted to cooperate with front holes of ISO containers.

A container is conventionally in the form of a parallelepiped box, intended for transporting goods. ISO standard defines standards for containers, in particular of dimensions (length, width, height), mass, or configurations (disposition of orifices allowing the container to be gripped, etc.). Due to standardization of the containers, the ISO standard facilitates handling thereof. For the purpose of transporting goods, the ISO container has to be moved and lifted, for loading and unloading on various vehicles, for example trucks or boats.

Handling of an ISO container, for example in port installations, is conventionally carried out by means of a container lifting system using container spreaders engaging in orifices in the four corners of the upper face of the container, the upper face being the face opposite the face placed on the ground. The container spreader then locks to the container, for example by means of rotating locks. This type of container lifting system with spreaders may be used to load or unload the container to or from a vehicle.

Handling of an ISO container can also be carried out by means of a lifting system engaging in orifices formed in the four corners of a vertical front face or rear face of the container, the front and opposite rear face (or wall) corresponding to a face of smaller dimensions of the container. For clarity it may be noted that the vertical walls with a longer horizontal dimensions are often referred to as side walls.

Load-handling vehicles are trucks which are conceived as carrier vehicles for transporting load carrying objects such as containers. Examples of such load-handling vehicles are roll-on/roll-off dump trucks or hook-lift trucks. Load-handling vehicles may hence be equipped with a working equipment comprising a loading arm assembly to be able to load and unload a container to or from the vehicle by itself.

Furthermore, there are loading arm assemblies which can receive a so-called ISO container. ISO standard 668 forms the respective standard for said ISO containers. The ISO standard 668 comprises among others, 1C, 1CC and 1CX containers, each having different heights. The ISO containers are gripped by the corners, and a correspondingly configured loading arm assembly has at least two corner grippers, wherein the corner grippers can grip the ISO container at the corners.

In known solutions, such as for a hook-lift, a loading arm assembly may have a main arm, wherein the main arm is disposed so as to be pivotable on the vehicle chassis. In turn, an auxiliary arm, configured so as to be elbow-shaped, is disposed on the main arm. The auxiliary arm may be disposed on the main arm by an articulated joint, a telescopic arrangement or a fixed mounting. Often a gripping hook is configured on the free end of the articulated arm. A lift frame having four corner grippers can be attached to the elbow-shaped region of the articulated arm, so as to thus be able to also load and unload ISO containers. The lift frame when not in use can be unloaded onto the load-handling vehicle behind the cab.

It has furthermore been demonstrated that gripping ISO containers is not always possible by way of four corner grippers, where e.g. the lower front corners of the container can, in certain conditions, be difficult to access. For example, such load-handling vehicles are also used for defense applications, wherein ISO containers or the transportation containers having hooks do not always stand on a flat solid ground but on rough terrain. There is the problem herein that the ISO containers can sink into soft ground and the lower corners of the ISO container if at all can thus only be reached with difficulty. This situation may occur, for example, in cold or wet countries, where the lower front corners of the container may be covered, for example, with snow, ice, or with mud. It is then not possible to attach the lower pins of a lift frame to the lower orifices of the container without first releasing the container, by cleaning its lower part or even by digging the ground. The container may also be in a tilted position in relation to the vehicle. In all such uses there is furthermore the problem that the operator of the load-handling vehicle can be exposed to danger when he/she gets out of the vehicle.

Thus, in the case where the lower corners of a container are difficult to access, the lift frame cannot lift or move the container without previously clearing the lower corners of the container. Such a clearance may prove to be lengthy and laborious, or even impossible.

Related prior art documents are identified below and briefly discussed.

EP3894273 relates to a loading arm arrangement for a swap body vehicle with a main arm, with an auxiliary arm and with a gripping hook. The loading arm arrangement is designed for unloading and loading transport containers with a hook, wherein a pivoting arm part is arranged pivotably on the auxiliary arm via a joint. A gripping hook is arranged pivotably on the pivoting arm part.

EP3802212 relates to a loading arm assembly for a load-handling vehicle, having a main arm and having an auxiliary arm. The loading arm assembly is configured for unloading and loading ISO containers and for unloading and loading transportation containers having a hook and is provided with a crossbeam having two corner grippers.

GB2298856 relates to an adapter structured to be attached to a hook lift and intended to be used for loading and unloading an ISO container.

EP3838666 relates to a lifting support for a container, comprising two upper pins and two lower pins, adapted to be inserted into complementary holes of the container when the lifting support is in a first position vis-à-vis the container. The lifting support is also provided with two intermediate pins, positioned between the two upper pins and the two lower pins, and adapted to be inserted into two complementary upper holes of the container when the lifting support is in a second position vis-à-vis the container. WO2021255345 relates to a loading arrangement for loading and unloading load units, e.g. a container, on and/or off a vehicle, such as a truck.

The object of the present invention is to achieve an improved working equipment provided with a lift frame assembly capable of handling various situations related to attaching and loading a load carrying object to a vehicle, particularly situations where the lower connectors of the load carrying object are not accessible, and/or where the load carrying object is in a tilted position and/or when the vehicle is used for transporting different kinds of load carrying objects with different sizes.

### Summary

The above-mentioned object is achieved by a working equipment defined by the independent claim.

Preferred embodiments are set forth in the dependent claims.

A working equipment comprising a conventional hooklift may be applied to implement the present invention. The driver can then choose to do the loading of e.g. a flatrack in the usual way with the hook, or to hook on the lift frame to load e.g. a container by using the lift frame. When the lift frame is not in use, it may be parked e.g. farthest towards the cab of the truck. In another implementation the lift frame assembly may be permanently attached to the movable arm of the hooklift.

The working equipment according to the present invention, provides an improved lift frame that enables the driver/operator to remain in the cab during loading. This is important in e.g. military applications, and is also a prerequisite for semi-autonomous or autonomous solutions where load carrying objects are loaded with remote confirmation and/or supervision of an operator e.g. sitting in the vehicle cab or at another location, or a fully autonomous loading solution without the need of human confirmation or supervision. In one embodiment, the working equipment allows lifting a submerged container without the operator leaving the cabin. Lifting a submerged container can thereby be automated and made as a part of the default work cycle.

In another embodiment the working equipment allows for lifting a tilted container without the operator leaving the cabin. Lifting a tilted container can thereby be automated and made as a part of the default work cycle.

In yet another embodiment the working equipment allows for lifting containers of various sizes, without the need for the operator leaving the cabin. Adjusting the lift frame assembly to containers with various sizes can thereby be automated and made as a part of the default work cycle.

### Brief description of the drawings

Figure 1 is a schematic illustration of a vehicle provided with working equipment according to the present invention.
Figure 2 is a block diagram of the working equipment according to the present invention.
Figure 3 is a front view of an embodiment of the lift frame assembly according to the present invention.
Figure 4 is a side view of an embodiment of the lift frame assembly according to the present invention.
Figure 5 is a front view of an embodiment of the lift frame assembly according to the present invention illustrating an attachment procedure of a tilted load carrying object.
Figures 6 and 7 are side views of an embodiment of the lift frame assembly according to the present invention illustrating an attachment procedure of a load carrying object where a lower part of the load carrying object is inaccessible.

### Detailed description

The working equipment will now be described in detail with references to the appended figures. Throughout the figures the same, or similar, items have the same reference signs. Moreover, the items and the figures are not necessarily to scale, emphasis instead being placed upon illustrating the principles of the invention.

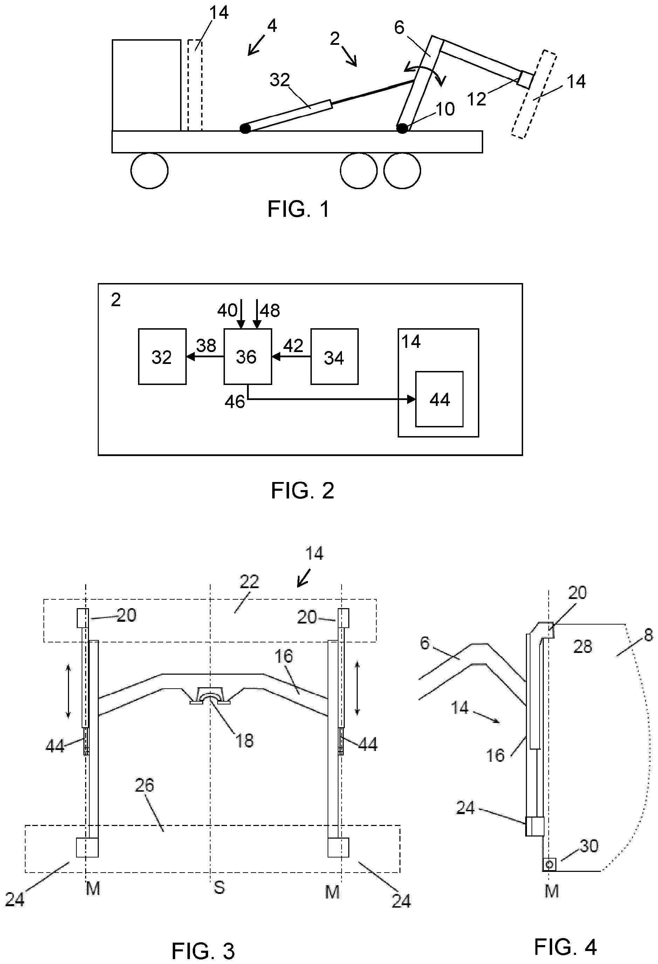

With references to figures 1-4, the working equipment 2, arranged to be mounted to a vehicle 4, will now be described in detail. The working equipment comprises a movable arm 6 for loading and unloading a load carrying object 8, such as a container, to/from the vehicle. The movable arm 6 has a first end 10 connected to the vehicle and a second end 12 arranged to connect the movable arm 6 to the load carrying object 8 during the loading or unloading.

The working equipment further comprises a lift frame assembly 14 comprising a lift frame 16 with an attachment part 18 arranged to be attached to the second end 12 of the movable arm 6, a pair of upper connectors 20 mounted at opposite sides of an upper part 22 of the lift frame 16, and a pair of lower connectors 24 mounted at opposite sides of a lower part 26 of the lift frame 16. The attachment part 18 may be in the shape of a bar adapted to engage with a hook at the second end 12 of the movable arm 6, this type of attachment provides a releasable connection between the parts that further allows for the lift frame assembly to pivot around the connection point. This type of attachment may further allow the lift frame assembly to be horizontally aligned when it is free-hanging at the hook. Other alternatives for attachment part 18 and the second end 12 are further possible that would provide a similar releasable and pivoting connection. As yet another alternative a non-releasable attachment between the attachment part 18 and the second end 12 may be provided.

The pairs of upper and lower connectors 20, 24 are adapted to attach the upper and lower parts 22, 26 of the lift frame 16 to a corresponding upper part 28 and lower part 30, respectively, of the load carrying object 8. As discussed in the background section the upper and lower parts of the load carrying object are provided with openings/orifices according to a specified standard, where the connectors of the lift frame will attach and lock in order to perform a loading/unloading procedure.

The upper connectors 20, and the lower connectors 24, are conventional, hydraulically or electrically, actuated connectors that are remotely operable, and thereby the operator does not need to get out of the cabin during this operation.

In addition, the working equipment is provided with an actuator system 32, arranged to operate movements of the working equipment 2. Preferably, the actuator system 32 comprises a pair of hydraulic cylinders or electrical actuators which is schematically illustrated in figure 1.

The working equipment is also provided with a sensor system 34, arranged to monitor the movements of the working equipment 2, and a control unit 36 configured to generate control instructions 38 to control the operation of the actuator system 32 in response to a loading/unloading command 40 for the loading and/or unloading of the load carrying object 8 and sensor signals 42 received from the sensor system 34.

The lift frame assembly 14 comprises a set of actuators 44 configured to change the positions of the upper connectors 20 relative to the attachment part 18 along parallel movement axes M close to the opposite sides of the lift frame 16, and parallel to a symmetry axis S of the lift frame 16. The symmetry axis S is parallel to the opposite sides of the lift frame 16 and is in a plane defined by the upper and lower parts 22, 26 of the lift frame 16. This is clearly illustrated in figures 3 and 4.

The set of actuators 44 are preferably hydraulic cylinders or electrical actuators, which is schematically shown in figure 3. The hydraulic cylinders are capable of providing enough hydraulic force to lift a front end of a fully loaded load carrying object 8 using these cylinders alone. Hoses for a possible hydraulic system and/or electrical cables for electric actuators and/or sensors may be guided from the vehicle to the lift frame assembly via the movable arm.

The control unit 36 is further configured to generate instructions 46 to control the set of actuators 44 to change the positions of the upper connectors 20 along the movement axes M during an attachment procedure for attaching the lift frame 16 to the load carrying object 8 in response of an attachment command 48, and sensor signals 42 from the sensor system 34. The instructions 46 both include instructions to change the positions of the upper connectors 20, and also instructions to perform the actual attachments of the connectors to the load carrying object during an attachment procedure.

The set of actuators 44 are preferably provided with position sensors, which are applied to adjust the distance between upper and lower connectors to correspond to the dimension of the load carrying object.

According to an embodiment, the attachment procedure is performed in dependence of sensor signals 42 obtained from the sensor system 34 regarding the positions of the upper connectors 20 relative the load carrying object 8, and that the sensor signals 42 include one or many of image signals, distance signals, and movement signals.

In a further embodiment, during the attachment procedure, the changing of the positions of the upper connectors 20 along the movement axes M are performed by individually changing the positions of the two upper connectors 20 such that they are at the same level. This may be performed until the upper connectors 20 are in positions to be attached, i.e. before they are attached. As an alternative, the procedure may be performed with one or both upper connectors 20 already being attached, to the load carrying object 8.

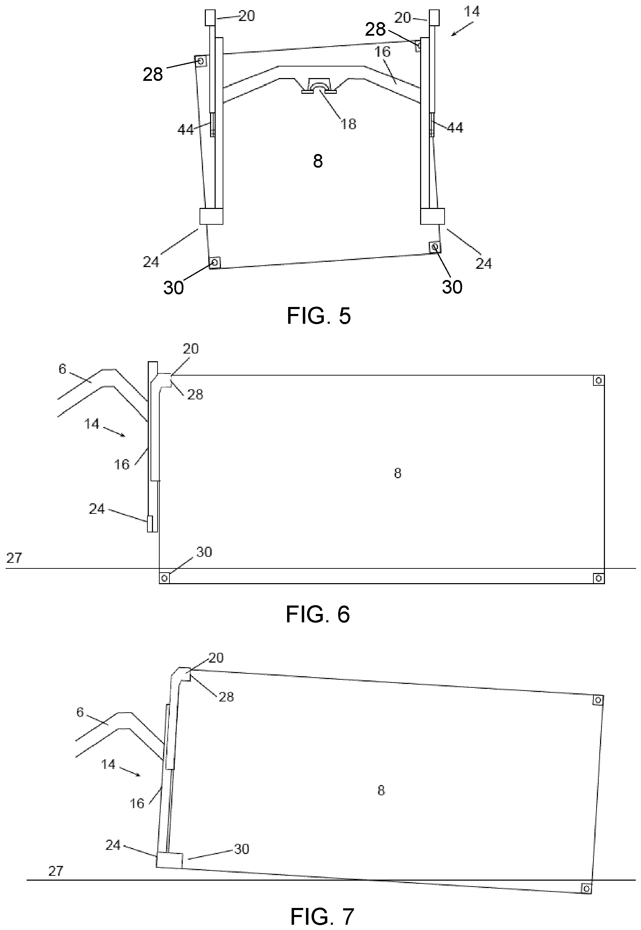

This version of the attachment procedure is particularly applicable when the load carrying object is tilted in relation to the lift frame. This situation is illustrated in figure 5, showing the lift frame assembly prior the attachment procedure is initiated. In this particular situation, in a first phase of the attachment procedure, the upper left connector may be first attached to the upper left connector of the load carrying object 8, and the attached connector is then moved upwards until the load carrying object is in a position where the upper right connector may be attached. Thereafter, both attached upper connectors are moved such that the lower connectors are in positions to be attached to the lower part of the load carrying object.

According to still a further embodiment, the attachment procedure is adapted to the type of load carrying object 8, e.g. the height of the load carrying object.

The type of the load carrying object may be determined by information captured by the sensor system by measuring the height of the load carrying object, e.g. a container, by input from an operator, or by identifying the type of load carrying object by location or a code on the load carrying object, to mention a few alternatives.

According to another embodiment, the second end 12 is provided with a hook, and the attachment part 18 is a bar, and the lift frame 16 is arranged to be stowed at the vehicle 4 during transport, or when the hook is used to load a load carrying object 8 to the vehicle. The lift frame 16 has preferably the shape of the letter "H" with two vertical side structures that the set of actuators (44) that is configured to change the positions of the upper connectors may be mounted to. A structure connecting, or linking, these two vertical side structures is further part of the lift frame in the H-shaped embodiment. The attachment part (18) may further be arranged at this connecting, or linking, structure in this embodiment. The H-shape is hence advantageous in that it provides a structure and symmetry of the lift frame that results in a natural horizontal levelling when the lift frame is hanging free at the second end (12) of the movable arm. The vertical side structures may further be arranged to at least partly cover and protect the actuators (44). Thus, the lift frame, as illustrated in figure 3 has essentially the shape of the capital letter H.

In a further embodiment, the attachment procedure is part of an autonomous or semiautonomous loading sequence.

According to still another embodiment, the control unit 36 is configured to control the set of actuators 44 to lift the load carrying object 8 by only the upper connectors 20 attached to the load carrying object 8 during an attachment procedure. This is in particular applicable in cases where the lower part 30 of the load carrying object 8 is inaccessible, e.g. the lower part of the load carrying object is covered by snow or has sunk down into the ground 27, or when the load carrying object 8 is in a tilted position.

This embodiment is illustrated by figures 6 and 7.

In figure 6 the lower part of the load carrying object is inaccessible. The upper connectors 20 are attached to the upper part of the load carrying object 8, and the load carrying object is then lifted by using only the upper connectors 20 until the lower part of the load carrying object is accessible. Then the lower connectors may be attached to the lower part 30, which is illustrated in figure 7.

In one general variation of the attachment procedure it comprises the steps of:
A - changing the positions of the upper connectors 20 along the movement axes M until the upper connectors 20 are in position to be attached to the load carrying object 8. This step is optional, as in some occasions the upper connectors are already in a position to be attached to the load carrying object. As an example this step may be used to adapt the positions of the upper connectors 20 to a particular size of the load carrying object 8. Analysis of sensor signals or input from an operator may be alternatives for receiving information about the suitable position for attachment to the load carrying object 8.
B- attaching the upper connectors 20 to the load carrying object 8.
C - changing the positions of the upper connectors 20 along movement axes M until the lower connectors 24 are in positions to be attached to the load carrying object 8.
D - attaching the lower connectors 24 to the load carrying object 8.

According to another embodiment, the attachment procedure is specifically intended to determine the type of the load carrying object 8, and comprises:
A - adapting the distances between said upper connectors 20 and the attachment part 18 to fit the size, e.g. the height, of the load carrying object 8.
B - attaching the upper connectors 20 to the load carrying object 8.
C -attaching the lower connectors 24 to the load carrying object 8.

This embodiment is in particular applicable to adapt the lift frame to different container sizes. As discussed in the background section, there are different standardized container sizes, and when identifying which container size it is (by either manual input or automatically through sensors) the size of the lift frame need to be adapted to the container size. This is typically performed before initiating the attachment if it is a standard loading sequence with no challenging conditions (e.g. not tilted or submerged container).

According to still another embodiment, the attachment procedure is specifically intended for a load carrying object 8 where its lower connectors 24 are inaccessible as illustrated in figures 6 and 7, and comprises:
A - adapting the distances between said upper connectors 20 and said attachment part 18 such that there is enough space to attach said upper connectors 20 to the load carrying object 8. This step is optional, as there might be enough space to attach said upper connectors 20 to the load carrying object 8 to start with. Analysis of sensor signals or input from an operator may be alternatives for receiving information about the suitable position for attachment to the load carrying object 8.
B - attaching the upper connectors 20 to the load carrying object 8.
C - increasing the distances between said upper connectors 20 and the attachment part 18 to lift a front end of the load carrying object 8 from ground, until the lower connectors 24 are accessible and in positions to be attached.
D -attaching the lower connectors 24 to the load carrying object 8.

This embodiment may be applied when the lower part of a container is not accessible as it is submerged into the ground, e.g. on a swampy ground, in snow or similar. The positioning of the upper connectors is first made and then only the upper connectors are attached. Then, by changing the positions of the upper connectors, the front end of the container is lifted from ground so that the lower part of the container gets accessible for the lower part of the lift frame. When lifting the front end of the container the position of the lower connectors may be positioned at the same time.

In a further embodiment, the attachment procedure is specifically intended for a tilted load carrying object 8, as illustrated in figure 5, and comprises:
A - adapting the distances between said upper connectors 20 and said attachment part 18 such that there is enough space to attach said upper connectors 20 to the load carrying object 8. This step is optional, as there might be enough space to attach said upper connectors 20 to the load carrying object 8 to start with. Analysis of sensor signals or input from an operator may be alternatives for receiving information about the suitable position for attachment to the load carrying object 8.
B - individually adjusting the positions of the upper connectors 20, relative to the attachment part 18, to match the upper corners of the tilted load carrying object 8.
C - attaching the upper connectors 20 to the load carrying object 8.
D - attaching the lower connectors 24 to the load carrying object 8.

In a further variation of the attachment procedure intended for a tilted load carrying object 8, the procedure further comprises, after attaching the upper connectors 20, and before attaching the lower connectors 24, levelling the position of the tilted load carrying object 8 by individually adjusting/increasing the distance between each of the upper connectors 20 and the attachment part 18. This is performed until the lower connectors 24 are in positions to be attached to the lower part 30 of the load carrying object 8.

This embodiment may be applied for levelling a tilted container.

A challenging position for in particular autonomous loading with no manual intervention, is if the container that is about to be loaded has a distinct tilt. By individually adapting the positions of the upper right and left connectors they may be attached to the container upper part despite the challenging tilt. When the container is attached, the front of the container may be lifted up by adjusting the positioning of the upper connectors. During the lift, the orientation of the container may further be adjusted by the individual control of the positions of the left and right side. When the container is levelled, the lower connectors may also be attached to the container and the container may be loaded on to the vehicle. The degree of tilt of the container and/or the corresponding relative positioning of the right and left upper connectors may be adjusted by the operator or based on feedback from the sensor system, e.g. a camera/lidar system, monitored either by the operator or through image analysis. Other types of distance or angle sensors may further or alternatively be used. The advantages with this embodiment of the invention is that even containers with a large degree of tilting may be loaded to the vehicle without the need for an operator to manually adjust the tilting frame to the container.

Any single or combination of the attachment procedures described in the various embodiments may further be implemented as attachment procedures for a single piece of working equipment. Which attachment procedure to be applied may be controlled through input from an operator of the equipment or based on analysis of sensor signals from the sensor system. As an example, sensors detecting and/or monitoring the environment and working area for the load handling, such as a camera or a LIDAR, may be used to detect and identify the load carrying object 8 and the situation for this load carrying object (if it is tilted, submerged in to the ground, etc.) and an attachment procedure may be suggested or chosen based on this in a semi-autonomously, or fully autonomously, manner.

The present invention is not limited to the above-described preferred embodiments. Various alternatives, and modifications may be used. Therefore, the above embodiments should not be taken as limiting the scope of the invention, which is defined by the appending claims.

## Claims

1. A working equipment (2) arranged to be mounted to a vehicle (4), the working equipment comprising:
- a movable arm (6) for loading and unloading a load carrying object (8), such as a container, to/from said vehicle, wherein the movable arm (6) has a first end (10) connected to said vehicle and a second end (12) arranged to connect the movable arm (6) to the load carrying object (8) during the loading or unloading;
- a lift frame assembly (14) comprising a lift frame (16) with an attachment part (18) arranged to be attached to the second end (12) of the movable arm (6), a pair of upper connectors (20) mounted at opposite sides of an upper part (22) of the lift frame (16), and a pair of lower connectors (24) mounted at opposite sides of a lower part (26) of the lift frame (16), wherein said pairs of upper and lower connectors (20, 24) are adapted to attach said upper and lower parts (22, 26) of the lift frame (16) to a corresponding upper part (28) and lower part (30), respectively, of the load carrying object (8);
- an actuator system (32), arranged to operate movements of the working equipment (2);
- a sensor system (34), arranged to monitor the movements of the working equipment (2), and
- a control unit (36) configured to generate control instructions (38) to control the operation of the actuator system (32) in response to a loading/unloading command (40) for the loading and/or unloading of the load carrying object (8) and sensor signals (42) received from the sensor system (34),
**characterized in that** the lift frame assembly (14) comprises a set of actuators (44) configured to change the positions of the upper connectors (20) relative to the attachment part (18) along parallel movement axes M close to the opposite sides of the lift frame (16), and parallel to a symmetry axis S of the lift frame (16), and that the control unit (36) is further configured to generate instructions (46) to control said set of actuators (44) to change the positions of the upper connectors (20) along the movement axes M during an attachment procedure for attaching said lift frame (16) to said load carrying object (8) in response of an attachment command (48), and sensor signals (42) from the sensor system (34).

2. The working equipment (2) according to claim 1, wherein the attachment procedure is performed in dependence of sensor signals (42) obtained from the sensor system (34) regarding the positions of the upper connectors (20) relative the load carrying object (8), and wherein said sensor signals (42) include one or many of image signals, distance signals, and movement signals.

3. The working equipment (2) according to claim 1 or 2, wherein during the attachment procedure, the changing of the positions of the upper connectors (20) along the movement axes M until the upper connectors (20) are in positions to be attached, or one or both upper connectors (20) already being attached, to the load carrying object (8), are performed by individually changing the positions of the upper connectors (20) such that they are at the same level, either before attachment or when one or both upper connectors (20) are attached.

4. The working equipment (2) according to any of claims 1-3, wherein the attachment procedure is adapted to the type of load carrying object (8), e.g. the height of the load carrying object.

5. The working equipment (2) according to any of claims 1-4, wherein the second end (12) is provided with a hook, and the attachment part (18) is a bar, and wherein the lift frame (16) is arranged to be stowed at the vehicle (4) during transport, or when the hook is used to load a load carrying object (8) to the vehicle.

6. The working equipment (2) according to any of claims 1-5, wherein said attachment procedure is part of an autonomous or semiautonomous loading sequence.

7. The working equipment (2) according to any of claims 1-6, wherein said lift frame (16) is an H-shaped lift frame.

8. The working equipment (2) according to any of claims 1-7, wherein the control unit (36) is configured to control said set of actuators (44) to lift said load carrying object (8) by only said upper connectors (20) attached to said load carrying object (8) during an attachment procedure where the lower part (30) of the load carrying object (8) is inaccessible or the load carrying object (8) is in a tilted position.

9. The working equipment (2) according to any of claims 1-8, wherein said symmetry axis S is parallel to the opposite sides of the lift frame (16) and in a plane defined by the upper and lower parts (22, 26) of the lift frame (16).

10. The working equipment (2) according to any of claims 1-9, wherein the attachment procedure comprises:
- attaching the upper connectors (20) to the load carrying object (8);
- changing the positions of the upper connectors (20) along movement axes M until the lower connectors (24) are in positions to be attached to the load carrying object (8), and
- attaching the lower connectors (24) to the load carrying object (8).

11. The working equipment (2) according to any of claims 1-9, wherein the attachment procedure is specifically intended to determine the type of the load carrying object (8), and comprises:
- adapting the distances between said upper connectors (20) and said attachment part (18) to fit the size, e.g. the height, of said load carrying object (8);
- attaching the upper connectors (20) to the load carrying object (8), and
- attaching the lower connectors (24) to the load carrying object (8).

12. The working equipment (2) according to any of claims 1-9, wherein the attachment procedure is specifically intended for a load carrying object (8) where its lower part (30) are inaccessible, and comprises:
- attaching the upper connectors (20) to the load carrying object (8);
- increasing the distances between said upper connectors (20) and said attachment part (18) to lift a front end of the load carrying object (8) from ground, until said lower part (30) is accessible and in position to be attached, and
- attaching the lower connectors (24) to the load carrying object (8).

13. The working equipment (2) according to any of claims 1-9, wherein the attachment procedure is specifically intended for a tilted load carrying object (8), and comprises:
- individually adjusting the positions of the upper connectors (20), relative to the attachment part (18), to match the upper corners of the tilted load carrying object (8);
- attaching the upper connectors (20) to the load carrying object (8), and
- attaching the lower connectors (24) to the load carrying object (8).

14. The working equipment (2) according to any of claim 13, wherein the attachment procedure intended for a tilted load carrying object (8) further comprises, after attaching the upper connectors (20), and before attaching the lower connectors (24), levelling the position of the tilted load carrying object (8) by individually adjusting/increasing the distance between each of the upper connectors (20) and said attachment part (18) until said lower connectors (24) are in positions to be attached to the lower part (30) of the load carrying object (8).

## Patentansprüche

1. Arbeitsausrüstung (2), die dazu ausgelegt ist, an einem Fahrzeug (4) montiert zu werden, wobei die Arbeitsausrüstung Folgendes umfasst:
- einen beweglichen Arm (6) zum Verladen und Entladen eines lasttragenden Objekts (8), wie etwa eines Containers, auf das/von dem Fahrzeug, wobei der bewegliche Arm (6) ein erstes Ende (10), das mit dem Fahrzeug verbunden ist, und ein zweites Ende (12), das dazu ausgelegt ist, den beweglichen Arm (6) während des Verladens oder Entladens mit dem lasttragenden Objekt (8) zu verbinden, aufweist;
- eine Hubrahmenanordnung (14), die einen Hubrahmen (16) mit einem Anbringungsteil (18), der dazu ausgelegt ist, an dem zweiten Ende (12) des beweglichen Arms (6) angebracht zu werden, ein Paar von oberen Verbindern (20), die an gegenüberliegenden Seiten eines oberen Teils (22) des Hubrahmens (16) montiert sind, und ein Paar von unteren Verbindern (24), die an gegenüberliegenden Seiten eines unteren Teils (26) des Hubrahmens (16) montiert sind, umfasst, wobei die Paare von oberen und unteren Verbindern (20, 24) dazu angepasst sind, den oberen und unteren Teil (22, 26) des Hubrahmens (16) an einem entsprechenden oberen Teil (28) bzw. unteren Teil (30) des lasttragenden Objekts (8) anzubringen;
- ein Betätigungssystem (32), das dazu ausgelegt ist, Bewegungen der Arbeitsausrüstung (2) zu steuern;
- ein Sensorsystem (34), das dazu ausgelegt ist, die Bewegungen der Arbeitsausrüstung (2) zu überwachen, und
- eine Steuereinheit (36), die dazu konfiguriert ist, Steueranweisungen (38) zu erzeugen, um den Betrieb des Betätigungssystems (32) als Reaktion auf einen Verlade-/Entladebefehl (40) für das Verladen und/oder Entladen des lasttragenden Objekts (8) und Sensorsignale (42), die von dem Sensorsystem (34) empfangen werden, zu steuern,
**dadurch gekennzeichnet, dass** die Hubrahmenanordnung (14) einen Satz von Betätigungselementen (44) umfasst, die dazu konfiguriert sind, die Positionen der oberen Verbinder (20) relativ zu dem Anbringungsteil (18) entlang paralleler Bewegungsachsen M nahe den gegenüberliegenden Seiten des Hubrahmens (16) und parallel zu einer Symmetrieachse S des Hubrahmens (16) zu verändern, und dass die Steuereinheit (36) ferner dazu konfiguriert ist, Anweisungen (46) zu erzeugen, um den Satz von Betätigungselementen (44) zu steuern, um die Positionen der oberen Verbinder (20) entlang der Bewegungsachsen M während eines Anbringungsvorgangs zum Anbringen des Hubrahmens (16) an dem lasttragenden Objekt (8) als Reaktion auf einen Anbringungsbefehl (48) und Sensorsignale (42) von dem Sensorsystem (34) zu verändern.

2. Arbeitsausrüstung (2) nach Anspruch 1, wobei der Anbringungsvorgang in Abhängigkeit von Sensorsignalen (42), die von dem Sensorsystem (34) erhalten werden, bezüglich der Positionen der oberen Verbinder (20) relativ zu dem lasttragenden Objekt (8) durchgeführt wird und wobei die Sensorsignale (42) eines oder viele von Bildsignalen, Abstandssignalen und Bewegungssignalen beinhalten.

3. Arbeitsausrüstung (2) nach Anspruch 1 oder 2, wobei während des Anbringungsvorgangs das Verändern der Positionen der oberen Verbinder (20) entlang der Bewegungsachsen M, bis sich die oberen Verbinder (20) in Positionen zum Anbringen an dem lasttragenden Objekt (8) befinden oder ein oder beide oberen Verbinder (20) bereits daran angebracht sind, durch einzelnes Verändern der Positionen der oberen Verbinder (20) durchgeführt wird, sodass sie sich auf der gleichen Höhe befinden, entweder vor der Anbringung oder wenn ein oder beide obere Verbinder (20) angebracht werden.

4. Arbeitsausrüstung (2) nach einem der Ansprüche 1-3, wobei der Anbringungsvorgang an die Art von lasttragendem Objekt (8) angepasst ist, d. h. an die Höhe des lasttragenden Objekts.

5. Arbeitsausrüstung (2) nach einem der Ansprüche 1-4, wobei das zweite Ende (12) mit einem Haken versehen ist und der Anbringungsteil (18) ein Balken ist und wobei der Hubrahmen (16) dazu ausgelegt ist, während des Transports, oder wenn der Haken verwendet wird, um ein lasttragendes Objekts (8) auf das Fahrzeug zu verladen, am Fahrzeug (4) verstaut zu werden.

6. Arbeitsausrüstung (2) nach einem der Ansprüche 1-5, wobei der Anbringungsvorgang Teil einer autonomen oder teilautonomen Verladeabfolge ist.

7. Arbeitsausrüstung (2) nach einem der Ansprüche 1-6, wobei der Hubrahmen (16) ein H-förmiger Hubrahmen ist.

8. Arbeitsausrüstung (2) nach einem der Ansprüche 1-7, wobei die Steuereinheit (36) dazu konfiguriert ist, den Satz von Betätigungselementen (44) zu steuern, um das lasttragende Objekt (8) anzuheben, indem nur die oberen Verbinder (20) während eines Anbringungsvorgangs an dem lasttragenden Objekt (8) angebracht werden, bei dem der untere Teil (30) des lasttragenden Objekts (8) nicht zugänglich ist oder das lasttragende Objekt (8) sich in einer geneigten Position befindet.

9. Arbeitsausrüstung (2) nach einem der Ansprüche 1-8, wobei die Symmetrieachse S parallel zu den gegenüberliegenden Seiten des Hubrahmens (16) und in einer Ebene ist, die durch den oberen und unteren Teil (22, 26) des Hubrahmens (16) definiert ist.

10. Arbeitsausrüstung (2) nach einem der Ansprüche 1-9, wobei der Anbringungsvorgang Folgendes umfasst:
- Anbringen der oberen Verbinder (20) an dem lasttragenden Objekt (8);
- Verändern der Positionen der oberen Verbinder (20) entlang der Bewegungsachsen M, bis sich die unteren Verbinder (24) in Positionen zum Anbringen an dem lasttragenden Objekt (8) befinden, und
- Anbringen der unteren Verbinder (24) an dem lasttragenden Objekt (8).

11. Arbeitsausrüstung (2) nach einem der Ansprüche 1-9, wobei der Anbringungsvorgang spezifisch dazu gedacht ist, die Art des lasttragenden Objekts (8) zu bestimmen, und Folgendes umfasst:
- Anpassen der Abstände zwischen den oberen Verbindern (20) und dem Anbringungsteil (18), um mit der Größe, z. B. der Höhe, des lasttragenden Objekts (8) übereinzustimmen;
- Anbringen der oberen Verbinder (20) an dem lasttragenden Objekt (8) und
- Anbringen der unteren Verbinder (24) an dem lasttragenden Objekt (8).

12. Arbeitsausrüstung (2) nach einem der Ansprüche 1-9, wobei der Anbringungsvorgang spezifisch für ein lasttragendes Objekt (8) gedacht ist, bei dem dessen unterer Teil (30) nicht zugänglich ist, und Folgendes umfasst:
- Anbringen der oberen Verbinder (20) an dem lasttragenden Objekt (8);
- Erhöhen der Abstände zwischen den oberen Verbindern (20) und dem Anbringungsteil (18), um ein vorderes Ende des lasttragenden Objekts (8) vom Boden anzuheben, bis der untere Teil (30) zugänglich ist und sich in Position zum Anbringen befindet, und
- Anbringen der unteren Verbinder (24) an dem lasttragenden Objekt (8).

13. Arbeitsausrüstung (2) nach einem der Ansprüche 1-9, wobei der Anbringungsvorgang spezifisch für ein geneigtes lasttragendes Objekt (8) gedacht ist und Folgendes umfasst:
- einzelnes Anpassen der Positionen der oberen Verbinder (20) relativ zu dem Anbringungsteil (18), um mit den oberen Ecken des geneigten lasttragenden Objekts (8) übereinzustimmen;
- Anbringen der oberen Verbinder (20) an dem lasttragenden Objekt (8) und
- Anbringen der unteren Verbinder (24) an dem lasttragenden Objekt (8).

14. Arbeitsausrüstung (2) nach Anspruch 13, wobei der Anbringungsvorgang, der für ein geneigtes lasttragendes Objekt (8) gedacht ist, ferner, nach dem Anbringen der oberen Verbinder (20) und vor dem Anbringen der unteren Verbinder (24), Nivellieren der Position des geneigten lasttragendes Objekts (8) durch einzelnes Anpassen/Erhöhen des Abstands zwischen jedem der oberen Verbinder (20) und dem Anbringungsteil (18) umfasst, bis sich die unteren Verbinder (24) in Positionen zum Anbringen an dem unteren Teil (30) des lasttragenden Objekts (8) befinden.

## Revendications

1. Équipement de travail (2) agencé pour être monté sur un véhicule (4), l'équipement de travail comprenant :
- un bras mobile (6) pour le chargement et le déchargement d'un objet porteur de charge (8), tel qu'un conteneur, sur/à partir dudit véhicule, dans lequel le bras mobile (6) a une première extrémité (10) reliée audit véhicule et une seconde extrémité (12) agencée pour relier le bras mobile (6) à l'objet porteur de charge (8) pendant le chargement ou le déchargement ;
- un ensemble cadre de levage (14) comprenant un cadre de levage (16) avec une partie de fixation (18) agencée pour être fixée à la seconde extrémité (12) du bras mobile (6), une paire de connecteurs supérieurs (20) montés au niveau de côtés opposés d'une partie supérieure (22) du cadre de levage (16), et une paire de connecteurs inférieurs (24) montés au niveau de côtés opposés d'une partie inférieure (26) du cadre de levage (16), dans lequel lesdites paires de connecteurs supérieurs et inférieurs (20, 24) sont adaptées à fixer lesdites parties supérieure et inférieure (22, 26) du cadre de levage (16) à une partie supérieure (28) et une partie inférieure (30) correspondantes, respectivement, de l'objet porteur de charge (8) ;
- un système d'actionneur (32), agencé pour actionner des mouvements de l'équipement de travail (2) ;
- un système de capteur (34), agencé pour surveiller les mouvements de l'équipement de travail (2), et
- une unité de commande (36) configurée pour générer des instructions de commande (38) pour commander le fonctionnement du système d'actionneur (32) en réponse à un ordre de chargement/déchargement (40) pour le chargement et/ou le déchargement de l'objet porteur de charge (8) et des signaux de capteur (42) reçus du système de capteur (34),
**caractérisé en ce que** l'ensemble cadre de levage (14) comprend un ensemble d'actionneurs (44) conçus pour changer les positions des connecteurs supérieurs (20) par rapport à la partie de fixation (18) le long d'axes de mouvement parallèles M à proximité des côtés opposés du cadre de levage (16), et parallèlement à un axe de symétrie S du cadre de levage (16), et **en ce que** l'unité de commande (36) est en outre configurée pour générer des instructions (46) pour commander ledit ensemble d'actionneurs (44) pour changer les positions des connecteurs supérieurs (20) le long des axes de mouvement M pendant une procédure de fixation pour fixer ledit cadre de levage (16) audit objet porteur de charge (8) en réponse à un ordre de fixation (48), et des signaux de capteur (42) provenant du système de capteur (34).

2. Équipement de travail (2) selon la revendication 1, dans lequel la procédure de fixation est réalisée en fonction de signaux de capteur (42) obtenus à partir du système de capteur (34) concernant les positions des connecteurs supérieurs (20) par rapport à l'objet porteur de charge (8), et dans lequel lesdits signaux de capteur (42) comportent un ou plusieurs parmi des signaux d'image, des signaux de distance et des signaux de mouvement.

3. Équipement de travail (2) selon la revendication 1 ou 2, dans lequel pendant la procédure de fixation, le changement des positions des connecteurs supérieurs (20) le long des axes de mouvement M jusqu'à ce que les connecteurs supérieurs (20) soient dans des positions à fixer, ou un ou les deux connecteurs supérieurs (20) étant déjà fixé(s), à l'objet porteur de charge (8), est réalisé en changeant individuellement les positions des connecteurs supérieurs (20) de telle sorte qu'ils sont au même niveau, soit avant la fixation, soit lorsqu'un ou les deux connecteurs supérieurs (20) sont fixés.

4. Équipement de travail (2) selon l'une quelconque des revendications 1 à 3, dans lequel la procédure de fixation est adaptée au type d'objet porteur de charge (8), par exemple la hauteur de l'objet porteur de charge.

5. Équipement de travail (2) selon l'une quelconque des revendications 1 à 4, dans lequel la seconde extrémité (12) est munie d'un crochet, et la partie de fixation (18) est une barre, et dans lequel le cadre de levage (16) est agencé pour être rangé au niveau du véhicule (4) pendant le transport, ou lorsque le crochet est utilisé pour charger un objet porteur de charge (8) sur le véhicule.

6. Équipement de travail (2) selon l'une quelconque des revendications 1 à 5, dans lequel ladite procédure de fixation fait partie d'une séquence de chargement autonome ou semi-autonome.

7. Équipement de travail (2) selon l'une quelconque des revendications 1 à 6, dans lequel ledit cadre de levage (16) est un cadre de levage en forme de H.

8. Équipement de travail (2) selon l'une quelconque des revendications 1 à 7, dans lequel l'unité de commande (36) est configurée pour commander ledit ensemble d'actionneurs (44) pour lever ledit objet porteur de charge (8) uniquement par lesdits connecteurs supérieurs (20) fixés audit objet porteur de charge (8) pendant une procédure de fixation où la partie inférieure (30) de l'objet porteur de charge (8) est inaccessible ou l'objet porteur de charge (8) est dans une position inclinée.

9. Équipement de travail (2) selon l'une quelconque des revendications 1 à 8, dans lequel ledit axe de symétrie S est parallèle aux côtés opposés du cadre de levage (16) et dans un plan défini par les parties supérieure et inférieure (22, 26) du cadre de levage (16).

10. Équipement de travail (2) selon l'une quelconque des revendications 1 à 9, dans lequel la procédure de fixation comprend :
- la fixation des connecteurs supérieurs (20) à l'objet porteur de charge (8) ;
- le changement des positions des connecteurs supérieurs (20) le long des axes de mouvement M jusqu'à ce que les connecteurs inférieurs (24) soient dans des positions pour être fixés à l'objet porteur de charge (8), et
- la fixation des connecteurs inférieurs (24) à l'objet porteur de charge (8).

11. Équipement de travail (2) selon l'une quelconque des revendications 1 à 9, dans lequel la procédure de fixation est spécifiquement destinée à déterminer le type de l'objet porteur de charge (8), et comprend :
- l'adaptation des distances entre lesdits connecteurs supérieurs (20) et ladite partie de fixation (18) pour s'adapter à la taille, par exemple la hauteur, dudit objet porteur de charge (8) ;
- la fixation des connecteurs supérieurs (20) à l'objet porteur de charge (8), et
- la fixation des connecteurs inférieurs (24) à l'objet porteur de charge (8).

12. Équipement de travail (2) selon l'une quelconque des revendications 1 à 9, dans lequel la procédure de fixation est spécifiquement destinée à un objet porteur de charge (8) où sa partie inférieure (30) est inaccessible, et comprend :
- la fixation des connecteurs supérieurs (20) à l'objet porteur de charge (8) ;
- l'augmentation des distances entre lesdits connecteurs supérieurs (20) et ladite partie de fixation (18) pour lever une extrémité avant de l'objet porteur de charge (8) du sol, jusqu'à ce que ladite partie inférieure (30) soit accessible et en position pour être fixée, et
- la fixation des connecteurs inférieurs (24) à l'objet porteur de charge (8).

13. Équipement de travail (2) selon l'une quelconque des revendications 1 à 9, dans lequel la procédure de fixation est spécifiquement destinée à un objet porteur de charge (8) incliné, et comprend :
- l'ajustement individuel des positions des connecteurs supérieurs (20), par rapport à la partie de fixation (18), pour correspondre aux coins supérieurs de l'objet porteur de charge (8) incliné ;
- la fixation des connecteurs supérieurs (20) à l'objet porteur de charge (8), et
- la fixation des connecteurs inférieurs (24) à l'objet porteur de charge (8).

14. Équipement de travail (2) selon la revendication 13, dans lequel la procédure de fixation destinée à un objet porteur de charge (8) incliné comprend en outre, après la fixation des connecteurs supérieurs (20), et avant la fixation des connecteurs inférieurs (24), la mise à niveau de la position de l'objet porteur de charge (8) incliné par ajustement/augmentation de manière individuelle de la distance entre chacun des connecteurs supérieurs (20) et ladite partie de fixation (18) jusqu'à ce que lesdits connecteurs inférieurs (24) soient dans des positions pour être fixés à la partie inférieure (30) de l'objet porteur de charge (8).
